# EUROPEAN PATENT APPLICATION

(11) **EP 0 587 355 A1**
(43) Date of publication of application: **16.03.1994**
(21) Application number: 93306807.4
(22) Date of filing: 27.08.1993
(51) Int. Cl.: G06F 3/023, G06F 3/033

(54) **Display control apparatus**

(30) Priority: 31.08.1992 JP 232388/92
(71) Applicant: PIONEER ELECTRONIC CORPORATION, Meguro-ku Tokyo 153 (JP)
(72) Inventor: Akiyama, Tetsuo, c/o Corporate R&D Lab., Tsurugashima-shi, Saitama 350-02 (JP)
(74) Representative: Tomlinson, Kerry John

(57) **Abstract**

A display control apparatus can be easily handled even if characters of a menu picture plane in a particular language cannot be read, and has a simple apparatus construction to display a desired menu picture plane. In a display control apparatus (3) which allows a previously stored menu picture plane (Fl) to be displayed on a display screen (5) of a display apparatus, the apparatus comprises a specific information storage for storing picture plane specific information (ID) which corresponds to each of a plurality of menu picture planes (Fl) which can be displayed in a one-to-one corresponding manner and which is used to specify the menu picture plane (Fl); and specific information display control device for allowing the picture plane specific information (ID) corresponding to the displayed menu picture plane (Fl) to be displayed on the display screen. The apparatus further comprises: specific information input device for receiving the picture plane specific information (ID) from the outside and, thereby, for generating display information of the specified menu picture plane (Fl); and menu display control device for allowing the corresponding menu picture plane (Fl) to be displayed on the basis of the display information.

## Description

The present invention relates to a display control apparatus, and more particularly to a display control apparatus for displaying a menu for allowing the user to select various kinds of operations on a screen of a CRT.

Hitherto, "menu" is generally known as a man-machine interface for using a computer.

According to a menu, commands (instructions) which the computer can accept at that time, parameters (variables), programs which can be processed, and the like are displayed as a list. The user can, accordingly, execute a desired process by merely choosing a desired item from among the displayed items by using a keyboard, a mouse, or the like. The desired process can be easily instructed and the number of errors is also reduced, so that the menu is commonly adopted as a man-machine interface for end users.

The above conventional menu display, however, requires a condition that the user can read the characters displayed on the menu screen displayed as a prerequisite. For example, a user who can read only English cannot operate the computer when the menu being displayed which he looks at is written in the Japanese language.

To solve such a drawback, there is an apparatus such that a menu is previously stored in a plurality of languages and the menu is displayed in a desired language by performing a predetermined selecting operation.

In such an apparatus, however, there is a problem in that a memory of an extremely large capacity is needed to store the menus in plural languages.

On the other hand, there also has been a problem in using a computer, that the picture plane of a desired menu picture cannot be easily displayed.

It is, therefore, an object of the invention to provide a display control apparatus in which even when the user cannot read characters displayed on the menu picture plane, he can easily handle the displayed characters. Also apparatus construction is simple, and a desired menu picture plane is displayed.

To solve the above problems, according to a first aspect of the present invention, there is provided a display control apparatus for allowing a previously stored menu picture plane to be displayed on a display screen of a display apparatus, wherein the display control apparatus comprises: specific information storing means for storing picture plane specific information which corresponds to each of the plurality of menu picture planes to be displayed in one-to-one relationship and which is used to specify said menu picture plane; and specific information display control means for allowing the picture plane specific information corresponding to the displayed menu picture plane to be displayed on the display screen when the menu picture plane is displayed on the display screen of the display apparatus.

According to the second aspect of the invention, there is provided a display control apparatus for allowing a previously stored menu picture plane to be displayed on a display screen of a display apparatus, wherein the display control apparatus comprises: specific information input means for generating display information of the specified menu picture plane when picture plane specific information which has been preset and is used to specify one of the menu picture planes is supplied from the outside; and menu display control means for allowing the corresponding menu picture plane to be displayed on the basis of the display information.

According to the first aspect of the invention, the specific information storing means stores the picture plane specific information which corresponds to each of the plurality of menu picture planes to be displayed in one-to-one relationship and which is used to specify the menu picture plane.

When the menu picture plane is displayed on the display screen of the display apparatus, consequently, the specific information display control means allows the picture plane specific information corresponding to the displayed menu picture plane to be displayed on the display screen.

For example, even in such a case that an operator cannot read the contents of the menu, as in the case where an operator who cannot read the Japanese language operates the computer, the content of the processing operations corresponding to the menu picture plane displayed can be easily recognized on the basis of only the picture plane specific information. By previously storing the processing contents of the menu picture plane corresponding to the picture plane specific information into a memory or the like, consequently, for example, a display item can be selected on the basis of the menu picture plane.

According to the second aspect of the invention, when the picture plane specific information which has been preset and is used to specify one of the menu picture planes is supplied from outside, the specific information input means generates the display information of the specified menu picture plane to the menu display control means.

The menu display control means, therefore, allows the corresponding menu picture plane to be displayed on the basis of the display information.

By merely inputting the picture plane specific information, accordingly, a desired menu picture plane can be easily displayed.
Embodiments of the present invention will now be described, by way of example only, with reference to the accompanying drawings, in which:
Fig. 1 is a block diagram showing a schematic construction of a computer system;
Fig. 2 is a block diagram showing a construction of a processing control apparatus;
Fig. 3 is a diagram for explaining a storing state of menu picture plane data;
Fig. 4 is a diagram for explaining a hierarchy structure of a menu picture plane;
Fig. 5 is a diagram for explaining a construction of the menu picture plane;
Fig. 6 is a first diagram for explaining a usage method of picture plane specific information;
Fig. 7 is a second diagram for explaining a usage method of the picture plane specific information; and
Fig. 8 is a diagram showing a construction of a second embodiment.

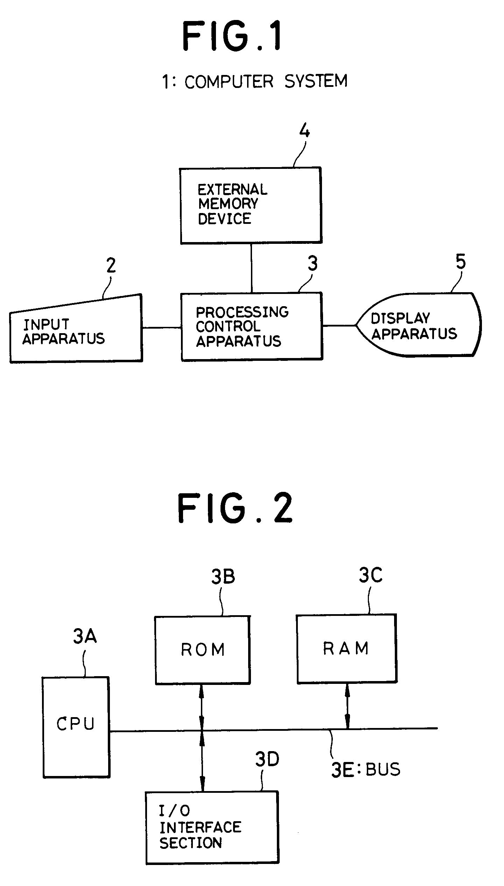

Fig. 1 shows a schematic diagram of the construction of a computer system to which a menu display control apparatus is applied.

A computer system 1 comprises: an input apparatus 2 for inputting various data,e.g. a keyboard, a mouse, a tablet, and the like; a processing control apparatus 3 to perform various arithmetic operations and processes; an external memory device 4 to store various data such as data for displaying a menu and the like; and a display apparatus 5 to display a menu picture plane, various data, or the like.

As shown in Fig. 2, the processing control apparatus 3 comprises: a CPU (central processing unit) 3A to control the whole system; a ROM (read only memory) 3B in which programs for fundamental processes, data, and the like have been stored; a RAM (random access memory) 3C to temporarily store the results of the arithmetic operations and the like; and an input/output interface section (I/O interface section) 3D to transmit and receive data to/from the outside.

The CPU 3A, ROM 3B, RAM 3C, and I/O interface section 3D are respectively connected through a bus 3E.

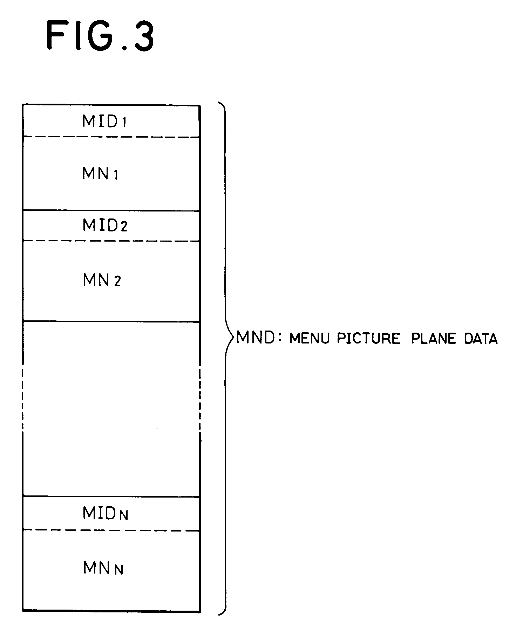

Fig. 3 shows a storing state of the menu picture plane data in the external memory device 4.

Menu picture plane data MND comprises: picture plane specific information data MIDₓ (x: 1 to N); and menu data MNₓ corresponding to the picture plane specific information data MID. Data of one menu picture is constructed by one set of picture plane specific information data MIDₓ and the menu data MNₓ.

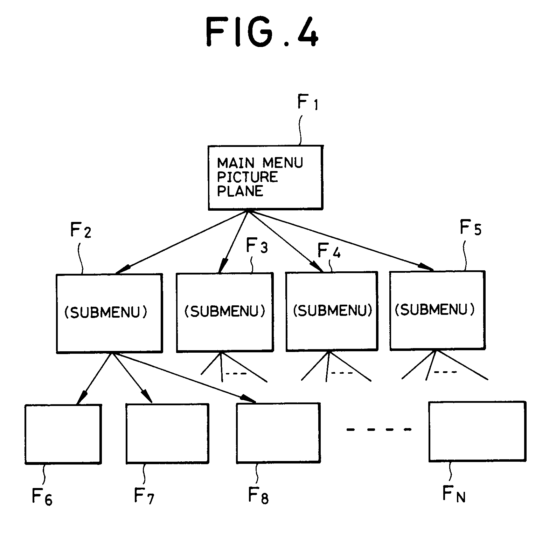

The menu picture plane display will now be described with reference to Figs. 4 to 6.

In the embodiment, as shown in Fig. 4, the menu picture plane forms a hierarchy structure of a tree structure and is constructed by N menu picture planes F₁ to Fₙ as a whole. The picture plane specific information data MIDₓ and menu data MNₓ (x is 1 to N) in Fig. 3 correspond to menu picture planes Fₓ (x is 1 to N). The menu picture plane F₁ serving as a root of the tree is called a main menu picture plane.

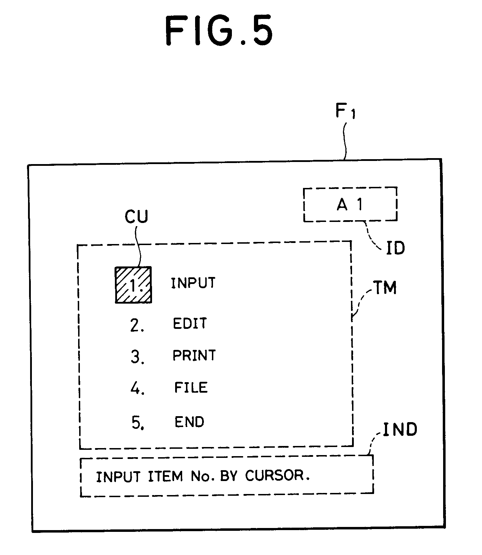

Fig. 5 shows a construction of the menu picture plane with respect to the main menu picture plane of a word processor as an example.

The menu picture plane F₁ comprises: a specific information display region ID to display picture plane specific information to specify the corresponding menu picture plane; a selection item display region TM to display items to be selected; and an indicating region IND in which indication information for selection is displayed.

A cursor CU (in the diagram, shown by a hatched portion), which is used for the user to check the selected item, is displayed in the selection item display region TM. The user performs a selecting operation by using a cursor key or the like (not shown) of the input apparatus.

Practically speaking, in the main menu picture plane F₁ of the word processor, characters such as input, edit, print, file, end, and the like as selection items are displayed and the corresponding selection item Numbers (1 to 5) are displayed in the central selection item region TM of the picture plane. The current cursor position is further displayed by the cursor CU.

An indication message such as "Input item No. by cursor." or the like is displayed in the lower indicating region IND of the selection item display region TM.

Picture plane specific information is displayed as, for example, "A1" in the specific information display region ID.

The picture plane specific information will now be described.

The picture plane specific information has been preset as a unique symbol for every menu picture plane and is used as an ID symbol of the relevant menu picture plane. In the case where there are N menu picture planes, therefore, N picture plane specific information are also set in correspondance with them.

By specifying certain picture plane specific information, the menu picture plane which unconditionally corresponds to it can be specified. In this case, it is sufficient to use any picture plane specific information so long as it can specify the relevant menu picture plane. Any one of numerals, alphabetic characters, figures, or the like can be solely used or a combination of them can also be used.

A practical usage method of the picture plane specific information will now be described.

For example, in the case where the menu display of the computer is expressed in Japanese and the actual operator cannot understand Japanese, a manual may be prepared in which the picture plane specific information corresponding to the displayed menu picture planes are written in association with the equivalent menu picture planes in a language (for example, English) which can be understood by the operator, so that by looking in the manual, the operator can execute a desired process.

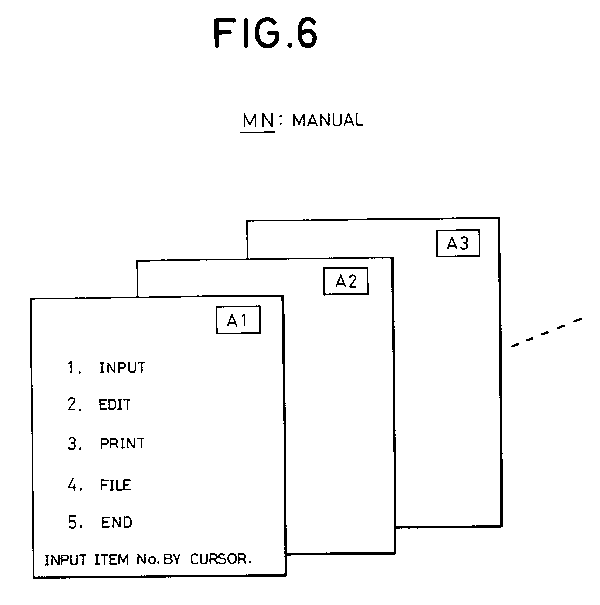

Specifically speaking, as shown in Fig. 6, English manuals MN corresponding to all of the menu picture planes as prepared and the same picture plane specific information ("A₁", "A₂", "A₃", etc. in Fig. 6) as the picture plane specific information of the menu picture plane is written in the manual. The operator, consequently, can execute a desired operation such as to choose a desired selection item or the like with reference to the manual on which the same specific information as the specific information of the menu picture plane displayed has been written. In Fig. 6, the manual of 'the picture plane specific information = "A₁"' corresponds to the main menu picture plane in Fig. 5.

In the case where the menu display of the computer is in the Japanese language and the operator who actually operates the computer cannot understand the Japanese language and is unfamiliar with the computer system or the like, processes can be executed by merely giving a memorandum indicative of the item No. to be selected together with the picture plane specific information of the menu picture plane.

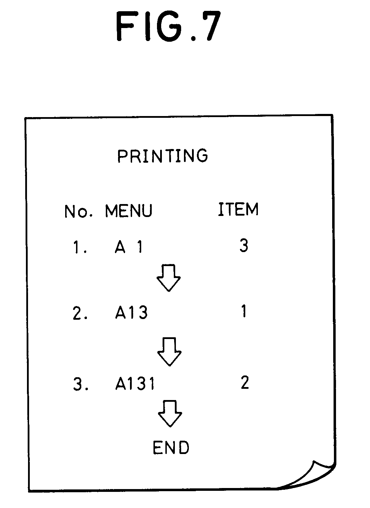

As a practical example, a case of printing with a word processor will now be described with reference to Fig. 7.

Fig. 7 shows an example of a memorandum in the case where "3. Print" is selected on the main menu picture plane (A₁), "1. Single slip print" is selected on the submenu picture plane (A₁₃) for printing, and "2. Hand insertion print" is selected on the submenu (A₁₃₁) for printing a single slip. "Characters" written in the parentheses in the description indicate the picture plane specific information.

Even in the case where the actual operator cannot understand the display contents in the menu picture plane, he can still execute a desired process by executing only the selecting operation in accordance with the instruction written in the memorandum.

According to the first embodiment as described above, even in the case where the operator cannot read the characters displayed on the menu picture plane, by executing the selecting operation on the basis of the picture plane specific information by using the manual or the like, a desired process can be easily performed. Therefore, even in the case where a program that executes processes in the Japanese language at first has been developed or the like, the processes can be easily executed by merely making an English manual on which the picture plane specific information for specifying the menu picture plane and the items to be selected have been written.

Although the first embodiment has been described above with respect to the case where one computer is used, the second embodiment will be described with respect to the case where a plurality of computers are connected through a network or the like.

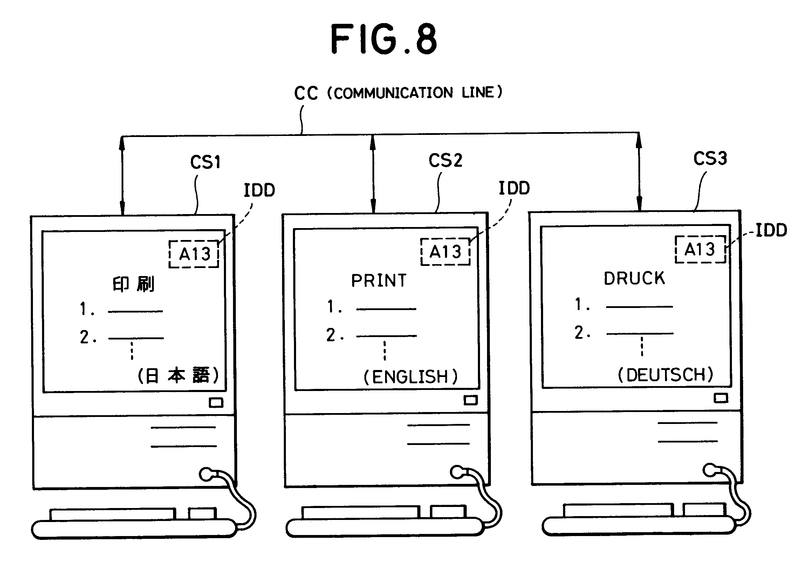

As shown in Fig. 8, computer networks are mutually connected through a communication line CC. It is now assumed that a first computer CS₁ executes processes in the Japanese language and a second computer CS₂ executes processes in English and a third computer CS₃ executes processes in German.

In this case, by setting picture plane specific information IDD to be common for the computers, even when processing languages are different, the same menu picture plane can be displayed by merely transmitting the picture plane specific information IDD through the communication line CC. An education with computers or the like can be executed at a remote location.

In the above second embodiment, the picture plane specific information has been transmitted through the communication line CC. By constructing a system in such a manner that a plurality of computers are closely arranged and picture plane specific information is transmitted from a computer mutually connected by an interface such as an RS232C or the like to another computer, the menu picture plane of the same contents can be displayed in a different language by every computer.

In the above second embodiment, the picture plane specific information has been transmitted or received through the communication line or interface. The picture plane specific information (menu picture plane No. or the like), however, can be transferred by an audio signal by using a telephone, in which case the processing operation can be easily transmitted to the caller.

According to the first invention, for example, even when the operator cannot read the characters of the menu picture plane as in the case where an operator who cannot read Japanese operates the computer or the like, the processing contents corresponding to the menu picture plane displayed can be easily recognized on the basis of only the picture plane specific information. Even when the operator cannot read the characters on the menu picture plane, therefore, the apparatus can be easily handled.

According to the second invention, by merely inputting picture plane specific information by a simple apparatus construction, a desired menu picture plane can be easily displayed.

## Claims

1. A display control apparatus for allowing a previously stored menu picture plane to be displayed on a display screen of a display apparatus, comprising:
specific information storing means for storing picture plane specific information which corresponds to each of said plurality of menu picture planes to be displayed in a one-to-one relationship and which is used to specify said menu picture plane; and
specific information display control means for allowing the picture plane specific information corresponding to said displayed menu picture plane to be displayed on the display screen when the menu picture plane is displayed on the display screen of the display apparatus.

2. An apparatus according to claim 1, further having specific information output means for providing said picture plane specific information to an outside apparatus.

3. A display control apparatus for allowing a previously stored menu picture plane to be displayed on a display screen of a display apparatus, comprising:
specific information input means for receiving picture plane specific information,which has been preset and is used to specify one of the menu picture planes, from the outside and, thereby, for generating display information of said specified menu picture plane; and
menu display control means for allowing the corresponding menu picture plane to be displayed on the basis of said display information.
